# FASCICULE DE BREVET EUROPEEN

(11) **EP 4 544 105 B1**
(45) Date de publication et mention de la délivrance du brevet: **05.08.2026**
(21) Numéro de dépôt: 23736178.7
(22) Date de dépôt: 13.06.2023
(51) Int. Cl.: D03D 1/00, B29B 11/16, D03D 13/00, D03D 25/00, D03D 49/60, D03D 49/62

(54) **MÉTIER À TISSER AVEC PEIGNE INCLINABLE ET PROCÉDÉ DE TISSAGE**
WEBMASCHINE MIT KIPPBAREM WEBBLATT UND WEBVERFAHREN
WEAVING LOOM WITH TILTABLE REED AND WEAVING METHOD

(30) Priorité: 21.06.2022 FR 2206080
(43) Date de publication de la demande: 30.04.2025
(73) Titulaire: Safran Ceramics, 33185 Le Haillan (FR); SAFRAN, 75015 Paris (FR)
(72) Inventeur: LEFEBVRE, Marie, 77550 MOISSY-CRAMAYEL (FR); PLANCKEEL, Aline, 77550 MOISSY-CRAMAYEL (FR); COUPE, Dominique Marie Christian, 77550 MOISSY-CRAMAYEL (FR)
(74) Mandataire: Cabinet Beau de Loménie
(86) Numéro de dépôt international: PCT/FR2023/050854
(87) Numéro de publication internationale: WO 2023/247859

(56) Documents cités:
- EP-A1- 0 310 847
- US-A- 3 425 459
- US-A1- 2022 111 606
- US-B2- 10 519 576

## Description

### Domaine Technique

La présente invention concerne un métier à tisser de type Jacquard et la réalisation de pièces en matériau composite et plus particulièrement la réalisation par tissage tridimensionnel (3D) de structures fibreuses de renfort pour de telles pièces.

### Technique antérieure

Un domaine d'application de l'invention est la réalisation de pièces en matériau composite structural, c'est-à-dire des pièces de structure à renfort fibreux et densifié par une matrice comme des pièces en matériau composite à matrice organique (CMO), à matrice carbone (C/C) et à matrice céramique (CMC). Les matériaux composites à matrice organique (CMO), à matrice carbone (C/C) et à matrice céramique (CMC) viennent en remplacement des pièces en matériau métallique dans certaines parties des turbomachines. Leur utilisation contribue à optimiser les performances des aéronefs notamment par l'amélioration du rendement de la turbomachine et la baisse de la masse globale de la turbomachine, réduisant de manière significative les émissions nocives pour l'environnement (CO,CO₂, NOx, ...).

L'invention concerne plus particulièrement le contrôle de la direction de juxtaposition des fils de trame dans les colonnes de fils de trame lors du tissage.

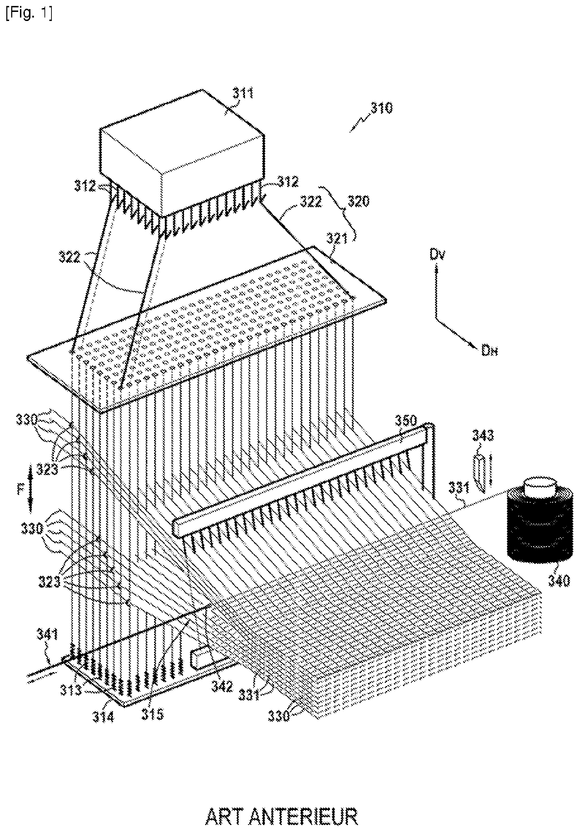

La figure 1 illustre schématiquement un métier à tisser 310 de type Jacquard utilisé pour la réalisation de textures fibreuses ou tissu obtenues par tissage multicouche entre une pluralité de couches de fils de chaîne 330 et une pluralité de couche de fils de trame 331.

De manière connue, le métier à tisser 310 est équipé d'une mécanique Jacquard 3311 supportée par une superstructure non représentée sur la figure 1. Le métier 10 comprend également un harnais 320 constitué d'une planche d'empoutage 321 et de fils de commande ou lisses 322, chaque lisse 322 étant reliée à une extrémité à un crochet de commande 12 de la mécanique Jacquard 311 et à l'autre extrémité à un des ressorts de rappel 313 fixés au bâti 314 du métier à tisser 310.

Chaque lisse 322 comprend un œillet 323 traversé par un fil de chaîne 330. Les lisses 322 et leur œillet 323 associé sont animés d'un mouvement d'oscillation sensiblement vertical représenté par la double flèche F sous les efforts de traction exercés respectivement par les crochets de commande 312 et les ressorts de rappel 313. Les lisses 322 permettent de soulever certains fils de chaîne 330 et de créer ainsi une foule 315, c'est-à-dire une ouverture entre nappes inférieures et supérieures de fils de chaîne 330 permettant l'introduction de fils de trame 331 au moyen d'une lance 341. La lance 341 est munie à son extrémité d'une pince 342 qui saisit un fil de trame 331 à partir d'une bobine 340 pour le placer au travers de l'ouverture entre les nappes de fils de chaîne 330 créée par la foule 315, le fils de trame 331 étant coupé à l'aide d'un couteau 343 après son positionnement dans la foule 315.

Un peigne 350 présent en amont de la lance 341 dans sa position de repos est alors rabattu afin de tasser le ou les fils de trame introduits dans la foule 315. La lance 341 est alors prête pour saisir à nouveau un nouveau fil de trame 331 à partir de la bobine 40 et le placer. On forme ainsi progressivement une structure fibreuse présentant un tissage tridimensionnels (3D) entre les fils de chaîne 330 et les fils de trame 31.

Si ce type de métier permet de réaliser des tissages complexes, c'est-à-dire 3D, toutes les colonnes de fils de trame sont orientées à 90° par rapport à une direction horizontale DH.

Or, il y a un intérêt à pouvoir positionner les colonnes de trames suivant un angle différent de 90°, en particulier pour pré-positionner les trames avant une mise en forme de la structure fibreuse ou pour définir des propriétés mécaniques spécifiques dans la pièce finale.

Les documents US 2022/111606, EP 0 310 847 et US 3 425 549 décrivent des métiers à tisser pour le tissage tridimensionnel d'un renfort fibreux pour un pièce en matériau composite.

### Exposé de l'invention

A cet effet, la présente invention propose un métier à tisser de type Jacquard destiné à réaliser une structure fibreuse par tissage tridimensionnel entre une pluralité de fils de chaîne et une pluralité de fils de trame s'étendant suivant une direction horizontale, le métier à tisser comprenant une pluralité de fils de commande apte à déplacer les fils de chaîne suivant une direction verticale, au moins une lance présente en aval des fils de commande apte à tirer un fil de trame et un peigne mobile entre une position de repos en amont de la lance et une position de frappe d'une façure de la structure fibreuse suivant une direction de frappe parallèle à la direction horizontale, caractérisé en ce que le peigne comprend au moins deux parties fixes formant un angle entre elles et en ce que le peigne est monté sur le métier à tisser au moyen d'un mécanisme de positionnement apte au moins à orienter le peigne autour d'un axe de rotation de manière à ajuster une position angulaire desdites au moins deux parties fixes du peigne par rapport à un plan de référence horizontal, le métier à tisser comprenant en outre des moyens de translation verticale aptes à déplacer le peigne ou la façure de la structure fibreuse suivant la direction verticale de manière à déplacer ledit peigne ou ladite façure vers le haut ou vers le bas par rapport au plan de référence horizontal.

Dans le métier à tisser de l'invention, l'angle avec lequel le peigne frappe la façure peut être ajusté à une valeur différente de 90° parrapport à un plan de référence horizontale. Il est ainsi possible de tisser des colonnes de fils de trame dans lesquelles les fils de trame sont juxtaposés suivant une direction de superposition non perpendiculaire au plan de référence horizontal. L'inclinaison de la direction de superposition est contrôlée par le choix de la valeur de l'angle de frappe du peigne.

Selon une caractéristique particulière du métier à tisser de l'invention, l'angle formé entre lesdites au moins deux parties fixes est compris entre 60° et 80°, plus préférentiellement un angle d'environ 70°.

L'invention a également pour objet un procédé de tissage tridimensionnel en une seule pièce d'une structure fibreuse entre une pluralité de couches de fils de chaîne et une pluralité de couches de fils de trame, le tissage étant réalisé par un métier à tisser selon l'invention, les fils de chaîne s'étendant suivant une direction horizontale correspondant à la direction d'avancement desdits fils de chaîne, les fils de trame s'étendant suivant une direction transversale, les fils de trame étant tissés en une pluralité de colonnes espacées les unes de autres suivant la direction horizontale, chaque colonne de fils de trame étant positionnée par le peigne du métier à tisser contre la façure de la structure fibreuse, les fils de trame de chaque colonne de fils de trame étant juxtaposés dans l'épaisseur de la structure fibreuse suivant une direction de superposition déterminée, le procédé comprenant le tissage d'au moins une portion à colonnes de trames inclinées dans la structure fibreuse, les fils de trame des colonnes de fils de trame de ladite au moins une portion à colonnes de trames inclinées étant juxtaposés suivant au moins une première direction de superposition non perpendiculaire à un plan de référence horizontal.

On forme ainsi une structure fibreuse comprenant une ou plusieurs portions de déploiement dans lesquelles les fils de trame dans les colonnes de fils de trame sont juxtaposés suivant une direction de superposition formant un angle avec la direction horizontale différent de 90°.

Selon une caractéristique particulière du procédé de l'invention, les fils de trame des colonnes de fils de trame de ladite au moins une portion à colonnes de trames inclinées sont juxtaposés suivant des première et deuxième directions de superposition différentes.

On forme ainsi une portion de structure fibreuse avec des colonnes de fils de trame présentant une forme brisée.

Selon une autre caractéristique particulière du procédé de l'invention, ladite au moins une portion à colonnes de trames inclinées est liée par tissage à une ou plusieurs portions adjacentes de la structure fibreuse, les fils de trame des colonnes de fils de trame de la ou les portions adjacentes étant juxtaposés suivant une direction de superposition perpendiculaire à la direction horizontale.

La ou les portions à colonnes de trames inclinées peuvent ici correspondre à une ou des portions de déploiement qui sont pliées lors de la mise en forme de la structure fibreuse. Ainsi, après pliage de la ou les portions à colonnes de trames inclinées, la variation angulaire résultant des forces de cisaillement qui s'exercent dans celles-ci lors de leur déploiement entraîne le redressement horizontal des colonnes de fils de trame dans ces portions et évite un décollement dans la structure fibreuse au niveau du rayon interne.

Selon une autre caractéristique particulière du procédé de l'invention, la première direction de superposition dans ladite au moins une portion à colonnes de trames inclinées forme un angle avec la direction horizontale compris entre 60° et 80°, plus préférentiellement un angle d'environ 70°.

L'invention a également pour objet un procédé de fabrication d'une pièce en matériau composite comprenant :
- le tissage d'une structure fibreuse conformément au procédé de tissage selon l'invention,
- la mise en forme de la structure fibreuse de manière à obtenir une préforme fibreuse,
- la densification de la préforme fibreuse par une matrice.

L'invention concerne en outre une structure fibreuse présentant un tissage tridimensionnel entre une pluralité de couches de fils de chaîne et une pluralité de couches de fils de trame, les fils de chaîne s'étendant suivant une direction horizontale, les fils de trame s'étendant suivant une direction transversale, la structure comprenant une pluralité de colonnes de fils de trame espacées les unes de autres suivant la direction horizontale, les fils de trame de chaque colonne de fils de trame étant juxtaposés dans l'épaisseur de la structure fibreuse suivant une direction de superposition déterminée, la structure fibreuse comprenant au moins une portion à colonnes de trames inclinées, les fils de trame des colonnes de fils de trame de ladite au moins une portion à colonnes de trames inclinées étant juxtaposés suivant au moins une première direction de superposition non perpendiculaire à la direction horizontale.

Selon une caractéristique particulière de la structure fibreuse de l'invention, les fils de trame des colonnes de fils de trame de ladite au moins une portion à colonnes de trames inclinées sont juxtaposés suivant des première et deuxième directions de superposition différentes. La structure fibreuse comporte ainsi une ou plusieurs portions avec des colonnes de fils de trame présentant une forme brisée.

Selon une autre caractéristique particulière de la structure fibreuse de l'invention, ladite au moins une portion à colonnes de trames inclinées est liée par tissage à une ou plusieurs portions adjacentes de la structure fibreuse, les fils de trame des colonnes de fils de trame de la ou les portions adjacentes étant juxtaposés suivant une direction de superposition perpendiculaire à la direction horizontale.

Selon une autre caractéristique particulière de la structure fibreuse de l'invention, la première direction de superposition dans ladite au moins une portion à colonnes de trames inclinées forme un angle avec la direction horizontale compris entre 60° et 80°, plus préférentiellement un angle d'environ 70°.

L'invention a encore pour objet une pièce en matériau composite comprenant un renfort fibreux densifié par une matrice caractérisée en ce que le renfort fibreux comprend une structure fibreuse selon l'invention.

### Brève description des dessins

[Fig. 1] La figure 1 est une vue schématique en perspective d'un métier à tisser de type Jacquard selon l'art antérieur,
[Fig. 2] La figure 2 est une vue schématique en perspective d'un métier à tisser de type Jacquard selon un mode de réalisation de l'invention,
[Fig. 3] La figure 3 est une vue de côté du métier à tisser de la figure 2 montrant le tissage d'une portion de structure fibreuse avec des colonnes de fils de trame perpendiculaires à un plan de référence horizontal,
[Fig. 4] La figure 4 est une vue de côté du métier à tisser de la figure 2 montrant le tissage d'une portion de structure fibreuse avec des colonnes de fils de trame inclinées suivant une direction de superposition,
[Fig. 5] La figure 5 est une vue de côté du métier à tisser de la figure 2 montrant le tissage d'une portion de structure fibreuse avec des colonnes de fils de trame inclinées suivant deux directions de superposition différentes,
[Fig. 6] La figure 6 est une vue de côté du métier à tisser de la figure 2 montrant le tissage d'une portion de structure fibreuse avec des colonnes de fils de trame inclinées suivant deux directions de superposition différentes.

### Description des modes de réalisation

L'invention s'applique d'une manière générale aux métiers à tisser de type Jacquard utilisés notamment pour réaliser des structures fibreuses ou tissus par tissage tridimensionnel (3D) entre des couches de fils de chaîne et des couches de fils de trame. L'invention s'applique plus particulièrement dans le cas du tissage 3D de structure fibreuse avec au moins une portion à colonnes de trames inclinées comme expliqué ci-après en détails. Par « tissage tridimensionnel » ou « tissage 3D », on entend ici un mode de tissage par lequel certains au moins des fils de trame lient des fils de chaîne sur plusieurs couches de fils de chaîne ou inversement. Un exemple de tissage tridimensionnel est le tissage dit à armure « interlock ». Par tissage « interlock », on entend ici une armure de tissage dans laquelle chaque couche de fils de chaîne lie plusieurs couches de fils de trame avec tous les fils d'une même colonne de chaîne ayant le même mouvement dans le plan de l'armure. Les fils utilisés ici peuvent être notamment des fils en fibres de carbone ou des fils en fibres céramiques tels que des fibres de carbure de silicium (SiC), l'invention n'étant pas limitée à ces seules natures de fils.

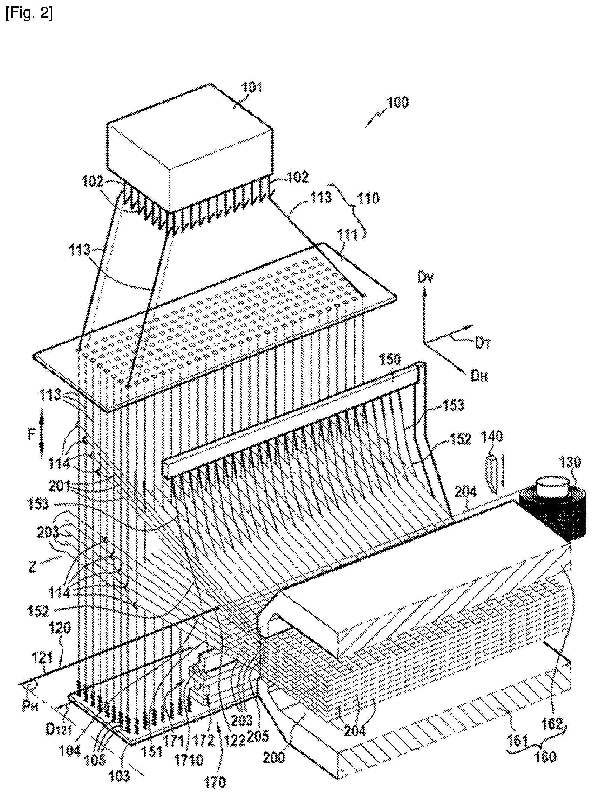

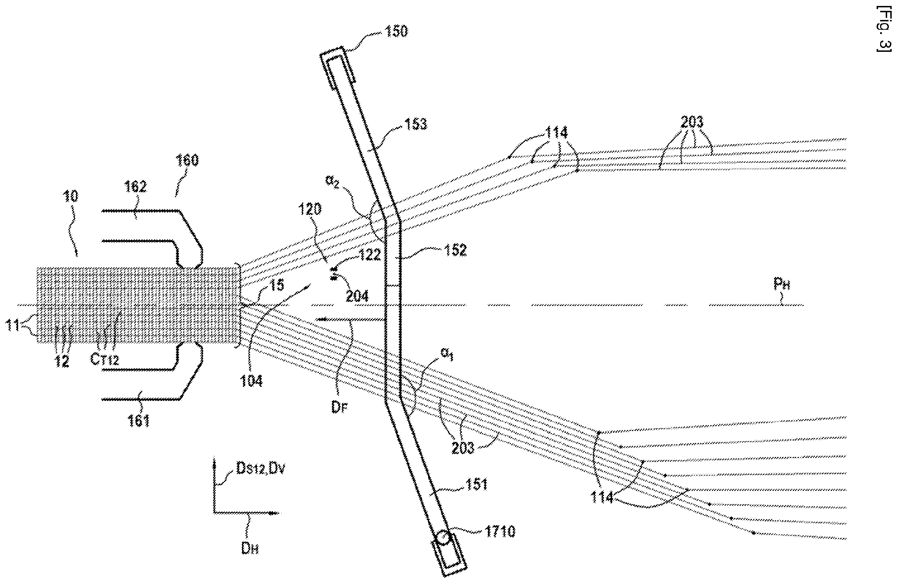

La figure 2 illustre un métier à tisser 100 conformément à un mode de réalisation de l'invention. Le métier à tisser 100 est équipé d'une mécanique Jacquard 101 supportée par une superstructure non représentée sur la figure 3. Le métier 100 comprend également un harnais 110 constitué d'une planche d'empoutage 111 et des fils de commande ou lisses 113, chaque lisse 113 étant reliée à une extrémité à un crochet de commande 102 de la mécanique Jacquard 101 et à l'autre extrémité à un des ressorts de rappel 105 fixés au bâti 103 du métier à tisser 100. Chaque lisse 113 comprend un œillet 114 traversé par un fil de chaîne 203. Les fils de chaîne 201 sont organisés au niveau du harnais 110 du métier à tisser en une pluralité de couches et de colonnes qui sont, comme expliqué ci-après, manipulées par le métier à tisser afin de permettre l'insertion de fils de trames 204 suivant le ou les motifs de tissage programmés dans le métier à tisser. Les fils de chaîne 203 s'étendent suivant une direction horizontale D_{H} correspondant à leur direction d'avancée lors du tissage. Les fils de trame 204 sont insérés entre les fils de chaîne par colonne suivant une direction transversale D_{T} perpendiculaire à la direction horizontale D_{H}. Afin de permettre l'introduction de chaque colonne de fils de trame lors du tissage de la structure fibreuse, un système d'appel des fils de chaîne (non représenté sur la figure 2) est associé au métier à tisser. Ce système, placé en aval du métier à tisser, a pour rôle de maintenir tous les fils de chaîne ensemble dans un dispositif de bridage et de permettre l'avancé des fils de chaîne d'une distance déterminée après l'insertion de chaque colonne de trame.

Les lisses 113 et leur œillet 114 associé s'étendent dans une zone Z dans laquelle les lisses 113 et les œillets 114 sont animés d'un mouvement d'oscillation sensiblement vertical représenté par la double flèche F. Lors de la création d'une foule, comme illustrée sur la figure 2, une partie des lisses 113 sont soumises à des efforts de traction exercés par les crochets de commande 102. Dans cette configuration, les lisses 113 permettent de soulever certains fils de chaîne 203 et de créer ainsi une foule 104 permettant le passage d'une lance 120 pour l'introduction de fils de trame 204.

La lance 120, présente en aval des lisses 113, est composée d'une tige 121 dont une première extrémité est reliée à un système d'actionnement (non représenté sur la figure 2) permettant d'animer la tige 121 d'un mouvement de va-et-vient suivant la double direction D₁₂₁. L'autre extrémité de la tige 121 est munie d'une pince 122 qui, après avoir traversé la foule 104 lors du trajet aller de la tige 121, vient saisir un fil de trame 204 stocké sur une bobine 130 pour le dérouler dans la foule 104 lors du trajet retour de la tige 121. Le fil de trame 204 ainsi placé à l'intérieur de la foule 104 est coupé au voisinage de la bobine 130 par un couteau 140 et libéré à son autre extrémité par la pince 122.

Un peigne 150 présent en amont de la lance 120 dans sa position de repos est alors rabattu afin de tasser le ou les fils de trame introduits dans la foule 104 contre la façure 205 d'une structure fibreuse 200. La lance 120 est alors prête pour saisir à nouveau un nouveau fil de trame 204 à partir de la bobine 130 et le placer soit à nouveau dans la foule 104, soit dans une foule différente en fonction du tissage défini. On forme ainsi progressivement une structure fibreuse 200 présentant un tissage 3D entre les fils de chaîne 203 et les fils de trame 204.

Conformément à l'invention, la direction de superposition des fils de trame dans chaque colonne de trame est ajustée avec le peigne 150. En effet, l'angle avec lequel le peigne frappe les fils de trame contre la façure 205 de la structure fibreuse 200 détermine la direction de superposition des fils de trame dans chaque colonne de fils de trame. A cet effet, dans la présente invention, le métier à tisser est équipé d'un peigne comprenant au moins deux parties fixes formant un angle entre elles, le peigne étant orientable afin de régler l'angle de frappe de celui-ci sur la façure de la structure fibreuse tissée en fonction de la direction de superposition que l'on souhaite obtenir dans chaque colonne de fils de trame. La direction de frappe du peigne est parallèle à la direction horizontale D_{H}. La position verticale du peigne par rapport à la structure fibreuse est en outre ajustable afin de positionner une ou plusieurs parties fixes du peigne en regards de la façure de la structure fibreuse.

Dans l'exemple décrit ici, le peigne 150 comprend successivement des première, deuxième et troisième parties fixes 151, 152 et 153 formant un angle entre elles, les première et deuxième parties fixes 151 et 152 formant entre elles un angle α₁ tandis que les deuxième et troisième parties fixes 152 et 153 forment entre elle un angle α₂ (figures 3 à 6).

Le peigne 150 est monté sur le métier à tisser au moyen d'un mécanisme de positionnement 170 solidaire par exemple du bâti 103. Le mécanisme 170 comprend un dispositif d'ajustement angulaire 171 comprenant un axe de rotation ou rotule 1710 auquel est reliée ici l'extrémité inferieure de la partie fixe 151 du peigne.

Le métier à tisser selon l'invention comprend également des moyens de translation verticale du peigne ou de la façure de la structure fibreuse.

Concernant la translation verticale du peigne, le mécanisme de positionnement 170 comprend en outre un dispositif de translation verticale 172 sur lequel est monté le dispositif d'ajustement angulaire 171, le dispositif de translation verticale 172 étant solidaire du bâti 103 du métier à tisser. Le dispositif 172 permet de déplacer le peigne 150 vers le haut ou vers le bas par rapport à un plan de référence horizontal P_{H}. Le plan de référence horizontal P_{H} correspond à la partie médiane de la façure 205 de la structure fibreuse suivant la direction verticale D_{V}.

Concernant la translation verticale de la façure de la structure fibreuse, le métier à tisser comprend en outre un dispositif de maintien 160 comprenant une mâchoire inférieure 161 et une mâchoire supérieure 162 chacune reliée à un moyen d'actionnement (non représentée sur la figure 2) qui est apte à maintenir la structure tissée 200, d'une part, et à déplacer les mâchoires 160 et 161 suivant la direction verticale D_{V}. Le dispositif de maintien 160 permet de déplacer la façure 205 de la structure tissée suivant la direction verticale D_{V} vers le haut ou vers le bas par rapport au plan de référence horizontal P_{H}.

Le mécanisme de positionnement 170 est ainsi apte à orienter le peigne autour de axe de rotation 1710 de manière à ajuster une position angulaire des première, deuxième et troisième parties fixes 151, 152 et 153 du peigne 150 par rapport au plan de référence horizontal P_{H} et à déplacer le peigne ou la façure de la structure fibreuse suivant la direction verticale D_{V} de manière à déplacer ledit peigne vers le haut ou vers le bas par rapport au plan de référence horizontal P_{H}.

Le peigne 150 et/ou le mécanisme de positionnement 160 sont montés sur un mécanisme de frappe (non représenté sur la figure 2) permettant de frapper la façure 205 de la structure fibreuse suivant une direction de frappe D_{F} parallèle à la direction horizontale D_{H}.

Ainsi, lors du tissage de chaque portion d'une structure fibreuse, les positions angulaire et verticale du peigne par rapport à la façure de la structure fibreuse sont ajustées de manière à ce qu'une ou plusieurs parties fixes du peigne frappe la façure de la structure fibreuse suivant un ou plusieurs angles déterminés.

On décrit maintenant plusieurs exemples de tissage 3D avec le métier à tisser 100 selon l'invention.

La figure 3 montre le tissage d'une portion 10 de structure fibreuse par tissage 3D entre une pluralité de couches de fils de chaîne 11 et une pluralité de couches de fils de trame 12. Les fils de trame sont tissés dans la portion 10 en une pluralité de colonnes C_{T12} espacées les unes des autres suivant la direction horizontale D_{H}. Les fils de trame de chaque colonne de fils de trame C_{T12} sont juxtaposés dans l'épaisseur de la portion 10 de structure fibreuse suivant une direction de superposition déterminée D_{S12} perpendiculaire au plan de référence horizontale P_{H}.

Lors du tissage de la portion 10, le peigne 150 est orienté autour de son axe de rotation 1710 de manière à ce que la deuxième partie fixe 152 soit perpendiculaire au plan de référence horizontal P_{H}. Le peigne 150 ou la façure 15 de la portion 10 de structure fibreuse est positionné suivant la direction verticale D_{V} de manière à ce que la deuxième partie fixe 152 soit en regard de la façure 15. Ainsi, à chaque frappe du peigne 150 sur la façure 15 suivant la direction de frappe D_{F}, les fils de trame de la portion 10 sont juxtaposés dans chaque colonne de fil de trame suivant la direction de superposition D_{S10} qui est perpendiculaire à la direction horizontale D_{H}.

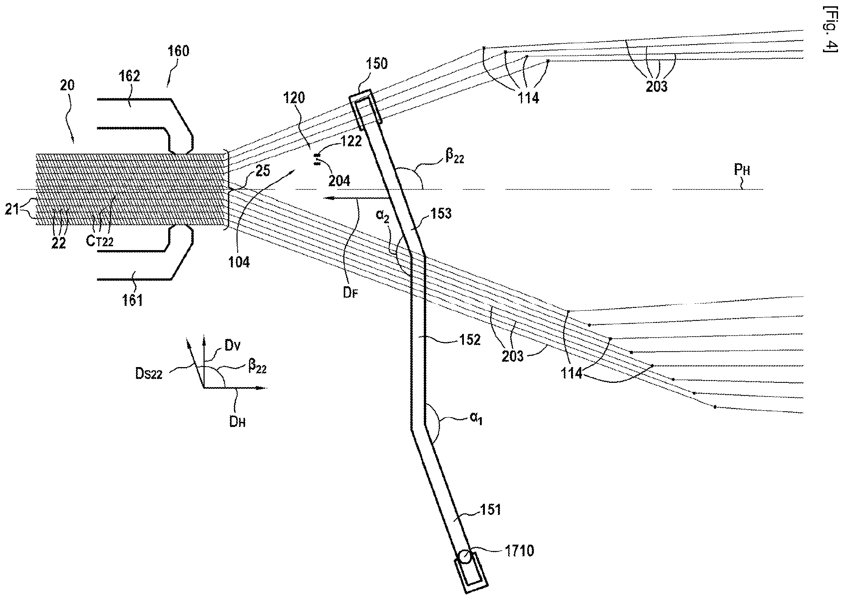

La figure 4 montre le tissage d'une portion 20 de structure fibreuse par tissage 3D entre une pluralité de couches de fils de chaîne 21 et une pluralité de couches de fils de trame 22. Les fils de trame sont tissés dans la portion 20 en une pluralité de colonnes C_{T22} espacées les unes des autres suivant la direction horizontale D_{H}. Les fils de trame 22 de chaque colonne de fils de trame C_{T22} de la portion 20 sont juxtaposés contre la façure 25 de la portion 20 de structure fibreuse suivant une direction de superposition D_{S22} non perpendiculaire au plan de référence horizontale P_{H}.

Lors du tissage de la portion 20 de structure fibreuse, le peigne 150 est orienté autour de son axe de rotation 1710 de manière à ce que la troisième partie fixe 153 forme un angle β₂₂ avec le plan de référence horizontal P_{H} qui est supérieur à 90°. Le peigne 150 ou la façure 25 est positionné suivant la direction verticale D_{V} de manière à ce que la troisième partie fixes 153 soient en regard de la façure 25. Ainsi, à chaque frappe du peigne 150 suivant la direction de frappe D_{F}, les fils de trame de la portion 20 sont juxtaposés dans chaque colonne de fil de trame suivant la direction de superposition D_{S22} formant l'angle β₂₂ avec le plan de référence horizontal P_{H}.

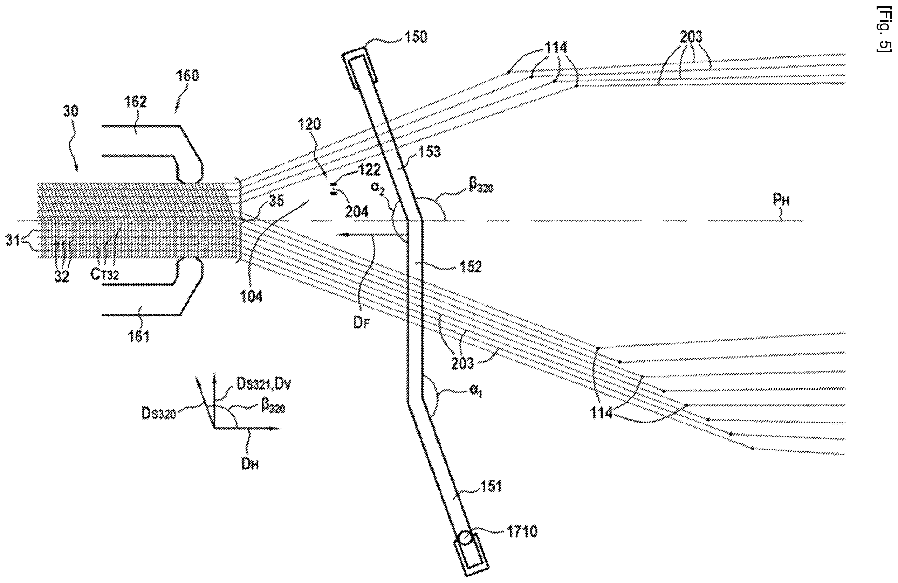

La figure 5 montre le tissage d'une portion 30 de structure fibreuse par tissage 3D entre une pluralité de couches de fils de chaîne 31 et une pluralité de couches de fils de trame 32. Les fils de trame sont tissés dans la portion 30 en une pluralité de colonnes C_{T32} espacées les unes des autres suivant la direction horizontale D_{H}. Les fils de trame 32 de chaque colonne de fils de trame C_{T32} de la portion 30 sont juxtaposés contre la façure 35 de la portion 30 de structure fibreuse suivant une première direction de superposition D_{S320} non perpendiculaire au plan de référence horizontale P_{H} et une deuxième direction de superposition D_{S321} perpendiculaire au plan de référence horizontale P_{H}.

Lors du tissage de la portion 30 de structure fibreuse, le peigne 150 est orienté autour de son axe de rotation 1710 de manière à ce que la première partie fixe 151 forme un angle β₃₂₀ avec le plan de référence horizontal P_{H} qui est supérieur à 90° et de manière à ce que la deuxième partie fixe 152 forme un angle de 90° avec le plan de référence horizontal P_{H}. Le peigne 150 ou la façure 35 est positionné suivant la direction verticale D_{V} de manière à ce qu'une portion de la première partie fixe 151 soit en regard d'une partie inférieure de la façure 35 et de manière à ce qu'une portion de la deuxième partie fixe 152 soit en regard d'une partie supérieure de la façure 35. Ainsi, à chaque frappe du peigne 150 suivant la direction de frappe D_{F}, les fils de trame de la portion 30 sont juxtaposés dans chaque colonne de fil de trame suivant la première direction de superposition D_{S320} formant l'angle β₃₂₀ avec le plan de référence horizontal P_{H} et suivant la deuxième direction de superposition DS321 perpendiculaire au plan de référence horizontale P_{H}. On obtient ainsi une portion de structure fibreuse avec des colonnes de fils de trame présentant une forme brisée.

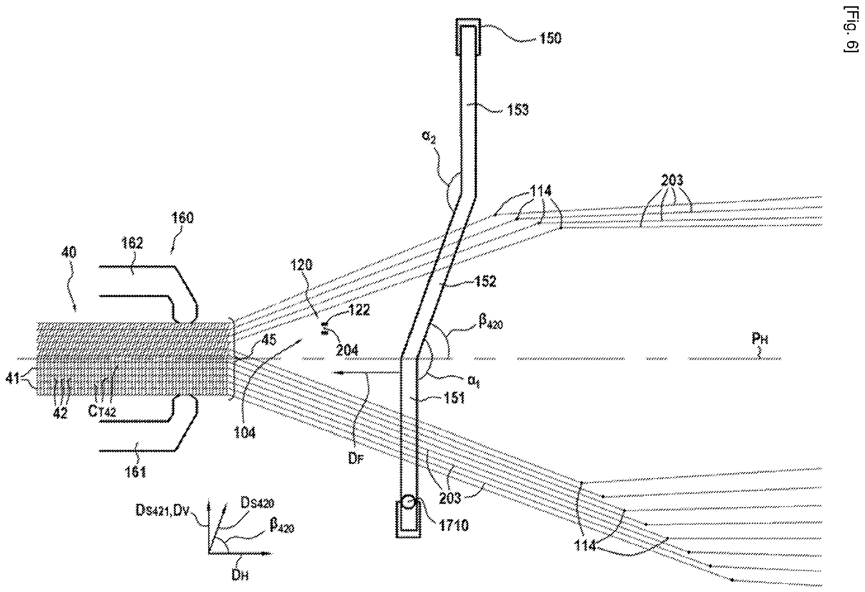

La figure 6 montre le tissage d'une portion 40 de structure fibreuse par tissage 3D entre une pluralité de couches de fils de chaîne 41 et une pluralité de couches de fils de trame 42. Les fils de trame sont tissés dans la portion 40 en une pluralité de colonnes C_{T42} espacées les unes des autres suivant la direction horizontale D_{H}. Les fils de trame 42 de chaque colonne de fils de trame C_{T42} de la portion 40 sont juxtaposés contre la façure 45 de la portion 40 de structure fibreuse suivant une première direction de superposition D_{S420} non perpendiculaire au plan de référence horizontale P_{H} et une deuxième direction de superposition D_{S421} perpendiculaire au plan de référence horizontale P_{H}.

Lors du tissage de la portion 40 de structure fibreuse, le peigne 150 est orienté autour de son axe de rotation 1710 de manière à ce que la deuxième partie fixe 152 forme un angle β₄₂₀ avec le plan de référence horizontal P_{H} qui est inférieur à 90° et de manière à ce que la troisième partie fixe 153 forme un angle de 90° avec le plan de référence horizontal P_{H}. Le peigne 150 ou la façure 45 est positionné suivant la direction verticale D_{V} de manière à ce qu'une portion de la deuxième partie fixe 152 soit en regard d'une partie inférieure de la façure 45 et de manière à ce qu'une portion de la troisième partie fixe 153 soit en regard d'une partie supérieure de la façure 45. Ainsi, à chaque frappe du peigne 150 suivant la direction de frappe D_{F}, les fils de trame de la portion 40 sont juxtaposés dans chaque colonne de fil de trame suivant la première direction de superposition D_{S420} formant l'angle β4₂₀ avec le plan de référence horizontal PH et suivant la deuxième direction de superposition D_{S421} perpendiculaire au plan de référence horizontale P_{H}. On obtient ainsi une portion de structure fibreuse avec des colonnes de fils de trame présentant une forme brisée.

Une structure fibreuse conforme à l'invention, c'est-à-dire comportant une portion à colonnes de trames inclinées ou brisées comme décrit ci-avant peut être utilisée comme renfort fibreux d'une pièce en matériau composite. A cet effet, après mise en forme éventuelle de la structure fibreuse, on procède à la densification de la structure ou préforme fibreuse afin de former une pièce en matériau composite. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou le procédé d'injection de charge céramique (Slurry Cast) ou le procédé d'imprégnation d'un alliage de silicium (MI ou RMI) ou encore suivant un enchaînement d'un ou plusieurs de ces procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC ou SiCN, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injectée la résine et les orifices d'évacuation de cette dernière afin de contrôler et d'optimiser l'imprégnation de la préforme par la résine.

La densification de la préforme peut encore être réalisée par imprégnation de polymère et pyrolyse (PIP), ou par imprégnation d'une barbotine (« slurry cast »), contenant par exemple du SiC et des liants organiques, suivie d'une infiltration avec du silicium liquide (« Melt infiltration »).

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

Les procédés de densification décrits ci-avant permettent de réaliser, à partir de la structure fibreuse de l'invention, principalement des pièces en matériau composite à matrice organique (CMO), à matrice carbone (C/C) et à matrice céramique (CMC). Les matériaux composites à matrice organique (CMO), à matrice carbone (C/C) et à matrice céramique (CMC) viennent en remplacement des pièces en matériau métallique dans certaines parties des turbomachines. Leur utilisation contribue à optimiser les performances des aéronefs notamment par l'amélioration du rendement de la turbomachine et la baisse de la masse globale de la turbomachine, réduisant de manière significative les émissions nocives pour l'environnement (CO,CO₂, NOx, ...).

Après densification, on obtient une pièce en matériau composite.

La structure fibreuse et son procédé de fabrication selon la présente invention peuvent notamment être utilisés pour réaliser des secteurs d'anneau de turbine, des raidisseurs, des aubes de turbomachine fixes ou mobiles.

## Revendications

1. Métier à tisser (100) de type Jacquard destiné à réaliser une structure fibreuse (200) par tissage tridimensionnel entre une pluralité de fils de chaîne (203) et une pluralité de fils de trame (204) s'étendant suivant une direction horizontale (D_{H}), le métier à tisser comprenant une pluralité de fils de commande (113) apte à déplacer les fils de chaîne suivant une direction verticale (D_{V}), au moins une lance (120) présente en aval des fils de commande (113) apte à tirer un fil de trame (204) et un peigne (150) mobile entre une position de repos en amont de la lance et une position de frappe d'une façure de la structure fibreuse suivant une direction de frappe (D_{F}) parallèle à la direction horizontale,
**caractérisé en ce que** le peigne (150) comprend au moins deux parties fixes (151, 152) formant un angle (α₁) entre elles et **en ce que** le peigne est monté sur le métier à tisser au moyen d'un mécanisme de positionnement (170) apte au moins à orienter le peigne autour d'un axe de rotation (1710) de manière à ajuster une position angulaire desdites au moins deux parties fixes du peigne par rapport à un plan de référence horizontal (P_{H}), le métier à tisser comprenant en outre des moyens de translation verticale (172, 160) aptes à déplacer le peigne ou la façure de la structure fibreuse suivant la direction verticale (D_{V}) de manière à déplacer ledit peigne ou ladite façure vers le haut ou vers le bas par rapport au plan de référence horizontal (P_{H}).

2. Métier à tisser selon la revendication 1, dans lequel l'angle (α1) formé entre lesdites au moins deux parties fixes est compris entre 60° et 80°.

3. Procédé de tissage tridimensionnel en une seule pièce d'une structure fibreuse entre une pluralité de couches de fils de chaîne et une pluralité de couches de fils de trame, le tissage étant réalisé par un métier à tisser (100) selon la revendication 1 ou 2, les fils de chaîne (21) s'étendant suivant une direction horizontale (D_{H}) correspondant à la direction d'avancement desdits fils de chaîne, les fils de trame (22) s'étendant suivant une direction transversale (D_{T}), les fils de trame étant tissés en une pluralité de colonnes (C_{T22}) espacées les unes de autres suivant la direction horizontal (D_{H}), chaque colonne de fils de trame étant positionnée par le peigne (150) du métier à tisser (100) contre la façure (25) de la structure fibreuse, les fils de trame de chaque colonne de fils de trame étant juxtaposés dans l'épaisseur de la structure fibreuse suivant une direction de superposition déterminée, le procédé comprenant le tissage d'au moins une portion à colonnes de trames inclinées (20) dans la structure fibreuse, les fils de trame des colonnes de fils de trame (C_{T22}) de ladite au moins une portion à colonnes de trames inclinées étant juxtaposés suivant au moins une première direction de superposition (D_{S22}) non perpendiculaire à un plan de référence horizontal (P_{H}).

4. Procédé selon la revendication 3, dans lequel les fils de trame (32) des colonnes de fils de trame (C_{T32}) de ladite au moins une portion à colonnes de trames inclinées sont juxtaposés suivant des première et deuxième directions de superposition différentes (D_{S320}, D_{S321}).

5. Procédé selon la revendication 3, dans lequel ladite au moins une portion à colonnes de trames inclinées (20) est liée par tissage à une ou plusieurs portions adjacentes de la structure fibreuse, les fils de trame des colonnes de fils de trame de la ou les portions adjacentes étant juxtaposés suivant une direction de superposition perpendiculaire à la direction horizontale (D_{H}).

6. Procédé selon l'une quelconque des revendications 3 à 5, dans lequel la première direction de superposition (D_{S22}) dans ladite au moins une portion à colonnes de trames inclinées (20) forme un angle avec la direction horizontale compris entre 60° et 80°.

7. Procédé de fabrication d'une pièce en matériau composite comprenant :
- le tissage d'une structure fibreuse conformément au procédé de tissage selon l'une quelconque des revendications 3 à 6,
- la mise en forme de la structure fibreuse de manière à obtenir une préforme fibreuse,
- la densification de la préforme fibreuse par une matrice.

8. Structure fibreuse obtenue conformément au procédé de tissage tridimensionnel selon la revendication 3, la structure fibreuse présentant un tissage tridimensionnel entre une pluralité de couches de fils de chaîne (21) et une pluralité de couches de fils de trame (22), les fils de chaîne s'étendant suivant une direction horizontale (D_{H}), les fils de trame s'étendant suivant une direction transversale (D_{T}), la structure comprenant une pluralité de colonnes de fils de trame espacées les unes de autres suivant la direction horizontale, les fils de trame de chaque colonne de fils de trame étant juxtaposés dans l'épaisseur de la structure fibreuse suivant une direction de superposition déterminée, **caractérisé en ce que** la structure fibreuse comprend au moins une portion à colonnes de trames inclinées (20), les fils de trame des colonnes de fils de trame (C_{T22}) de ladite au moins une portion à colonnes de trames inclinées étant juxtaposés suivant au moins une première direction de superposition (D_{S22}) non perpendiculaire à la direction horizontale.

9. Structure selon la revendication 8, dans laquelle les fils de trame (32) des colonnes de fils de trame (C_{T32}) de ladite au moins une portion à colonnes de trames inclinées (30) sont juxtaposés suivant des première et deuxième directions de superposition différentes (D_{S320}, D_{S321}).

10. Structure selon la revendication 8, dans laquelle ladite au moins une portion à colonnes de trames inclinées (20) est liée par tissage à une ou plusieurs portions adjacentes de la structure fibreuse, les fils de trame des colonnes de fils de trame de la ou les portions adjacentes étant juxtaposés suivant une direction de superposition perpendiculaire à la direction horizontale.

11. Structure selon l'une quelconque des revendications 8 à 10, dans laquelle la première direction de superposition (D_{S22}) dans ladite au moins une portion à colonnes de trames inclinées (20) forme un angle (β₂₂) avec la direction horizontale compris entre 60° et 80°.

12. Pièce en matériau composite comprenant un renfort fibreux densifié par une matrice **caractérisée en ce que** le renfort fibreux comprend une structure fibreuse selon l'une quelconque des revendications 8 à 11.

## Patentansprüche

1. Jacquard-Webmaschine (100), die dazu bestimmt ist, eine Faserstruktur (200) durch dreidimensionales Weben zwischen einer Vielzahl von Kettfäden (203) und einer Vielzahl von Schussfäden (204), die sich in einer horizontalen Richtung (D_{H}) erstrecken, herzustellen, wobei die Webmaschine eine Vielzahl von Steuerfäden (113) umfasst, die geeignet sind, die Kettfäden in einer vertikalen Richtung (Dᵥ) zu bewegen, mindestens eine Lanze (120), die den Steuerfäden (113) nachgelagert angeordnet und geeignet ist, einen Schussfaden (204) zu ziehen, und ein Blatt (150), das zwischen einer Ruhestellung der Lanze vorgelagert und einer Anschlagstellung an einer Webkante der Faserstruktur in einer Anschlagrichtung (D_{F}) parallel zu der horizontalen Richtung beweglich ist,
**dadurch gekennzeichnet, dass** das Blatt (150) mindestens zwei feste Teile (151, 152) umfasst, die zwischen sich einen Winkel (α₁) bilden, und dass das Blatt mittels eines Positionierungsmechanismus (170) an der Webmaschine angebracht ist, der mindestens dazu geeignet ist, das Blatt um eine Rotationsachse (1710) auszurichten, um eine Winkelposition der mindestens zwei festen Teile des Blatts relativ zu einer horizontalen Bezugsebene (P_{H}) einzustellen, wobei die Webmaschine ferner vertikale Translationsmittel (172, 160) umfasst, die geeignet sind, das Blatt oder die Webkante der Faserstruktur in der vertikalen Richtung (Dᵥ) zu bewegen, um das Blatt oder die Webkante relativ zu der horizontalen Bezugsebene (P_{H}) nach oben oder nach unten zu bewegen.

2. Webmaschine nach Anspruch 1, wobei der zwischen den mindestens zwei festen Teilen gebildete Winkel (α1) zwischen 60° und 80° liegt.

3. Verfahren zum dreidimensionalen Weben einer Faserstruktur in einem einzigen Teil zwischen einer Vielzahl von Kettfadenschichten und einer Vielzahl von Schussfadenschichten, wobei das Weben durch eine Webmaschine (100) nach Anspruch 1 oder 2 durchgeführt wird, wobei sich die Kettfäden (21) in einer horizontalen Richtung (D_{H}) erstrecken, die der Vorschubrichtung der Kettfäden entspricht, wobei sich die Schussfäden (22) in einer Querrichtung (D_{T}) erstrecken, wobei die Schussfäden in eine Vielzahl von voneinander in der horizontalen Richtung (D_{H}) beabstandeten Säulen (C_{T22}) eingewebt sind, wobei jede Schussfadensäule durch das Blatt (150) der Webmaschine (100) an der Webkante (25) der Faserstruktur positioniert ist, wobei die Schussfäden jeder Schussfadensäule in der Dicke der Faserstruktur in einer bestimmten Stapelrichtung nebeneinander angeordnet sind, wobei das Verfahren das Weben mindestens eines Abschnitts mit geneigten Schussfadensäulen (20) in der Faserstruktur umfasst, wobei die Schussfäden der Schussfadensäulen (C_{T22}) des mindestens einen Abschnitts mit geneigten Schussfadensäulen in mindestens einer ersten Stapelrichtung (D_{S22}), die nicht senkrecht zu einer horizontalen Bezugsebene (P_{H}) ist, nebeneinander angeordnet sind.

4. Verfahren nach Anspruch 3, wobei die Schussfäden (32) der Schussfadensäulen (C_{T32}) des mindestens einen Abschnitts mit geneigten Schussfadensäulen in einer ersten und einer zweiten verschiedenen Stapelrichtung (D_{S320}, D_{S321}) nebeneinander angeordnet sind.

5. Verfahren nach Anspruch 3, wobei der mindestens eine Abschnitt mit geneigten Schussfadensäulen (20) durch Weben mit einem oder mehreren angrenzenden Abschnitten der Faserstruktur verbunden ist, wobei die Schussfäden der Schussfadensäulen des oder der angrenzenden Abschnitte in einer zu der horizontalen Richtung (D_{H}) senkrechten Stapelrichtung nebeneinander angeordnet sind.

6. Verfahren nach einem der Ansprüche 3 bis 5, wobei die erste Stapelrichtung (D_{S22}) in dem mindestens einen Abschnitt mit geneigten Schussfadensäulen (20) mit der horizontalen Richtung einen Winkel zwischen 60° und 80° bildet.

7. Verfahren zur Herstellung eines Bauteils aus Verbundmaterial, das umfasst:
- das Weben einer Faserstruktur gemäß dem Webverfahren nach einem der Ansprüche 3 bis 6,
- das Formen der Faserstruktur, um einen Faser-Vorformling zu erhalten,
- das Verdichten des Faser-Vorformlings durch eine Matrix.

8. Faserstruktur, erhalten gemäß dem dreidimensionalen Webverfahren nach Anspruch 3, wobei die Faserstruktur eine dreidimensionale Webung zwischen einer Vielzahl von Kettfadenschichten (21) und einer Vielzahl von Schussfadenschichten (22) aufweist, wobei sich die Kettfäden in einer horizontalen Richtung (D_{H}) erstrecken, wobei sich die Schussfäden in einer Querrichtung (D_{T}) erstrecken, wobei die Struktur eine Vielzahl von voneinander in der horizontalen Richtung beabstandeten Schussfadensäulen umfasst, wobei die Schussfäden jeder Schussfadensäule in der Dicke der Faserstruktur in einer bestimmten Stapelrichtung nebeneinander angeordnet sind, **dadurch gekennzeichnet, dass** die Faserstruktur mindestens einen Abschnitt mit geneigten Schussfadensäulen (20) umfasst, wobei die Schussfäden der Schussfadensäulen (C_{T22}) des mindestens einen Abschnitts mit geneigten Schussfadensäulen in mindestens einer ersten Stapelrichtung (D_{S22}), die nicht senkrecht zu der horizontalen Richtung ist, nebeneinander angeordnet sind.

9. Struktur nach Anspruch 8, wobei die Schussfäden (32) der Schussfadensäulen (C_{T32}) des mindestens einen Abschnitts mit geneigten Schussfadensäulen (30) in einer ersten und einer zweiten verschiedenen Stapelrichtung (D_{S320}, D_{S321}) nebeneinander angeordnet sind.

10. Struktur nach Anspruch 8, wobei der mindestens eine Abschnitt mit geneigten Schussfadensäulen (20) durch Weben mit einem oder mehreren angrenzenden Abschnitten der Faserstruktur verbunden ist, wobei die Schussfäden der Schussfadensäulen des oder der angrenzenden Abschnitte in einer zu der horizontalen Richtung senkrechten Stapelrichtung nebeneinander angeordnet sind.

11. Struktur nach einem der Ansprüche 8 bis 10, wobei die erste Stapelrichtung (D_{S22}) in dem mindestens einen Abschnitt mit geneigten Schussfadensäulen (20) mit der horizontalen Richtung einen Winkel (β₂₂) zwischen 60° und 80° bildet.

12. Bauteil aus Verbundmaterial, das ein durch eine Matrix verdichtetes Faserverstärkungsmaterial umfasst, **dadurch gekennzeichnet, dass** das Faserverstärkungsmaterial eine Faserstruktur nach einem der Ansprüche 8 bis 11 umfasst.

## Claims

1. A Jacquard type loom (100) intended to produce a fibrous structure (200) by three-dimensional weaving between a plurality of warp yarns (203) and a plurality of weft yarns (204) extending in a horizontal direction (D_{H}), the loom comprising a plurality of control yarns (113) able to move the warp yarns in a vertical direction (D_{V}), at least one rapier (120) present downstream of the control yarns (113) able to pull a weft yarn (204) and a reed (150) movable between a rest position upstream of the rapier and a beat-up position of a fell of the fibrous structure in a beat-up direction (D_{F}) parallel to the horizontal direction,
**characterized in that** the reed (150) comprises at least two stationary portions (151, 152) forming an angle (α₁) therebetween and **in that** the reed is mounted on the loom by means of a positioning mechanism (170) able to at least orient the reed about an axis of rotation (1710) so as to adjust an angular position of said at least two stationary portions of the reed relative to a horizontal reference plane (P_{H}), the loom further comprising vertical translation means (172, 160) able to move the reed or the fell of the fibrous structure in the vertical direction (D_{V}) so as to move said reed or said fell upwards or downwards relative to the horizontal reference plane (P_{H}).

2. The loom according to claim 1, wherein the angle (α₁ formed between said at least two stationary portions is comprised between 60° and 80°.

3. A method for three-dimensional weaving in a single piece of a fibrous structure between a plurality of layers of warp yarns and a plurality of layers of weft yarns, the weaving being performed by a loom (100) according to claim 1 or 2, the warp yarns (21) extending in a horizontal direction (D_{H}) corresponding to the direction of advance of said warp yarns, the weft yarns (22) extending in a transverse direction (D_{T}), the weft yarns being woven in a plurality of columns (C_{T22}) spaced from each other in the horizontal direction (D_{H}), each column of weft yarns being positioned by the reed (150) of the loom (100) against the fell (25) of the fibrous structure, the weft yarns of each column of weft yarns being juxtaposed in the thickness of the fibrous structure in a determined layering direction, the method comprising the weaving of at least one section with inclined weft columns (20) in the fibrous structure, the weft yarns of the column of weft yarns (C_{T22}) of said at least one section with inclined weft columns being juxtaposed in at least one first layering direction (D_{S22}) not perpendicular to a horizontal reference plane (P_{H}).

4. The method according to claim 3, wherein the weft yarns (32) of the columns of weft yarns (C_{T32}) of said at least one section with inclined weft columns are juxtaposed in different first and second layering directions (D_{S320}, D_{S321}).

5. The method according to claim 3, wherein said at least one section with inclined weft columns (20) is interlinked by weaving to one or more adjacent sections of the fibrous structure, the weft yarns of the columns of weft yarns of the adjacent section(s) being juxtaposed in a layering direction perpendicular to the horizontal direction (D_{H}).

6. The method according to any one of claims 3 to 5, wherein the first layering direction (D_{S22}) in said at least one section with inclined weft columns (20) forms an angle with the horizontal direction comprised between 60° and 80°.

7. A method for manufacturing a composite material part comprising:
- weaving a fibrous structure in accordance with the weaving method according to any one of claims 3 to 6,
- shaping the fibrous structure so as to obtain a fibrous preform,
- densifying the fibrous preform by a matrix.

8. A fibrous structure obtained in accordance with the three-dimensional weaving method according to claim 3, the fibrous structure having a three-dimensional weaving between a plurality of layers of warp yarns (21) and a plurality of layers of weft yarns (22), the warp yarns extending in a horizontal direction (D_{H}), the weft yarns extending in a transverse direction (D_{T}), the structure comprising a plurality of columns of weft yarns spaced from each other in the horizontal direction, the weft yarns of each column of weft yarns being juxtaposed in the thickness of the fibrous structure in a determined layering direction, the fibrous structure comprising at least one section with inclined weft columns (20), the weft yarns of the columns of weft yarns (C_{T22}) of said at least one section with inclined weft columns being juxtaposed in at least one first layering direction (D_{S22}) not perpendicular to the horizontal direction.

9. The structure according to claim 8, wherein the weft yarns (32) of the columns of weft yarns (C_{T32}) of said at least one section with inclined weft columns (30) are juxtaposed in different first and second layering directions (D_{S320}, D_{S321}).

10. The structure according to claim 8, wherein said at least one section with inclined weft columns (20) is interlinked by weaving to one or more adjacent sections of the fibrous structure, the weft yarns of the columns of weft yarns of the adjacent section(s) being juxtaposed in a layering direction perpendicular to the horizontal direction.

11. The structure according to any one of claims 8 to 10, wherein the first layering direction (D_{S22}) in said at least one section with inclined weft columns (20) forms an angle (β₂₂) with the horizontal direction comprised between 60° and 80°.

12. A composite material part comprising a fibrous reinforcement densified by a matrix, **characterized in that** the fibrous reinforcement comprises a fibrous structure according to any one of claims 8 to 11.
